## Europäisches Patentamt
## European Patent Office
## Office européen des brevets

(19)

(11) Veröffentlichungsnummer: **0 034 204**
**A1**

(12) # EUROPÄISCHE PATENTANMELDUNG

(21) Anmeldenummer: **80106832.1**

(22) Anmeldetag: **06.11.80**

(51) Int. Cl.³: **C 08 F 20/44**
**C 08 F 265/08**

(30) Priorität: **19.02.80 DE 3006172**

(43) Veröffentlichungstag der Anmeldung:
**26.08.81 Patentblatt 81/34**

(84) Benannte Vertragsstaaten:
**DE FR GB IT NL SE**

(71) Anmelder: **Röhm GmbH**
**Kirschenallee**
**D-6100 Darmstadt(DE)**

(72) Erfinder: **Sütterlin, Norbert, Dr.**
**Am Horeth 23**
**D-6105 Ober-Ramstadt(DE)**

(72) Erfinder: **Tilch, Willi**
**Wilhelmstrasse 63**
**D-6107 Reinheim(DE)**

(72) Erfinder: **Hübner, Klaus, Dr.**
**Leipziger Strasse 9**
**D-6105 Ober-Ramstadt-Eiche(DE)**

(72) Erfinder: **Werner, Siol, Dr.**
**Mühlbergstrasse 4**
**D-6102 Pfungstadt(DE)**

(54) **Verfahren zur Herstellung rest-acrylnitril-armer Polymerisat-Dispersionen und die so hergestellten Dispersionen.**

(57) Die Erfindung betrifft ein Verfahren zur Herstellung von wäßrigen aus Acrylnitril neben anderen Comonomeren aufgebauten Polymerisatdispersionen im Emulsions- oder Monomer-Zulaufverfahren mit niedrigem Gehalt an Acrylnitril-Restmonomeren, wobei der Monomerenzusatz in einem ersten Polymerisationsabschnitt unter Zudosierung des gesamten Acrylnitrils zusammen mit wenigstens einem weiteren Monomeren und in einem zweiten Abschnitt der Zusatz überwiegend solcher Monomerer erfolgt, deren Wasserlöslichkeit bei Raumtemperatur zwischen 1 und $10^{-4}$ Mol/1 beträgt.

- I -

Verfahren zur Herstellung rest-Acrylnitril-
armer Polymerisat-Dispersionen

Die Erfindung betrifft ein Verfahren zur Herstellung
wäßriger Polymerisat-Dispersionen mit niedrigem Rest-
Acrylnitril-Gehalt bei Verwendung von Acrylnitril als
Comonorem.
Dispersionen von Polymerisaten, die Acrylnitrilmonomere
enthalten, spielen auf dem Gebiet der Lack-, Papier-
und Textilienindustrie, aber auch beispielsweise im
Bausektor als Zusatz zu Beton-, Mörtel- und Kunstharzputzen usw., eine beträchtliche Rolle.

Als weitere Monomerenkomponente kommen z.B. Styrol,
die Ester der Acryl- und/oder der Methacrylsäure, die
Acryl- und die Methacrylsäure sowie deren Amide infrage.
Von besonderer Bedeutung sind die Ester von niederen
Alkoholen, beispielsweise $C_1$-$C_4$-Alkoholen, wie Methylmethacrylat, Butylacrylat, Äthylacrylat und die entsprechenden Methacrylate, aber auch die Ester höherer
Alkohole, wie die des 2-Äthylhexylalkohols, finden Anwendung.

Die Acrylnitrilkomponente verleiht den Polymerisaten gewisse Eigenschaften, die in vielen Fällen technisch sehr erwünscht sind. Solche Polymerisate sind im allgemeinen weich und zähelastisch, aber dabei klebfrei. In gewissen Anwendungsbereichen wird eine Abmischung der wäßrigen acrylnitrilhaltigen Dispersionen mit Phenol-, Harnstoff- oder Melamin-Formaldehyd-Kondensaten vorgenommen. (Vgl. OE-PS 226 435).

Den qualitativ vorteilhaften Eigenschaften des Acrylnitrils als Comonomerem, steht die Forderung der Technik nach einem möglichst geringen Rest-Monomerengehalt gegenüber.
Da Acrylnitril mit Wasser ein Azetrop (88 Gew.-% Acrylnitril) bildet, das bei 71°C siedet, kann man auf destillativem Weg versuchen, den Restgehalt an Acrylnitrilmonomeren zu senken. Dabei besteht allerdings das Problem der Beseitigung von acrylnitrilhaltigem Abwasser und der Einhaltung niedriger Acrylnitrilgehalte in der Abluft.

Es wurde gefunden, daß man wäßrige, aus Acrylnitril neben anderen Comonomeren aufgebaute, Polymerisatdispersionen im Emulsions- bzw. Monomer-Zulaufverfahren erhalten kann mit einem geringen Restmonomerengehalt an Acrylnitril, wenn man den Emulsions- bzw. Monomerenzusatz in mindestens zwei Abschnitten vornimmt, wobei im ersten Polymerisationsabschnitt das gesamte Acrylnitril zusammen mit wenigstens einem anderen Comonomeren zudosiert und im zweiten Polymerisationsabschnitt im wesentlichen solche Comonomeren zugesetzt werden, deren Wasserlöslichkeit bei Raumtemperatur zwischen 1 und $10^{-4}$ mol/l beträgt und gegebenenfalls von dem dann vorhandenen niedrigeren Niveau an Restacrylnitril ausgehend, unter Zusatz weiterer Initiatoren, vorzugsweise von Redoxinitiatoren, den Gehalt an Acrylnitril auf einen Wert < 50 ppm absenkt. Der Anteil des Acrylnitrils beträgt in der Regel 0,5 bis 50 Gew.-%, vorzugsweise 3 bis 40 Gew.-%, bezogen auf die Gesamtheit der Monomeren. Vorzugsweise können als Comonomere, deren Wasserlöslichkeit bei Raumtemperatur zwischen 1 und $10^{-4}$ mol/l beträgt, Ester der Acryl- und/oder der Methacrylsäure mit $C_1$ bis $C_4$-Alkoholen u. Styrol angewendet werden.

Vertreter der vorstehend genannten Verbindungsklasse können ebenfalls im ersten Polymerisationsabschnitt zudosiert werden. Besonders genannt seien Methylmethacrylat, Äthylacrylat und Butylacrylat bzw. die entsprechenden Methacrylate.

Die im Patentanspruch getroffene Kennzeichnung, hinsichtlich der den Polymerisationsabschnitten zuzuordnenden Monomeren, läßt Möglichkeiten hinsichtlich weiterer Comonomerer und damit auch zur Beeinflussung der Produkteigenschaften offen. Der erste Polymerisationsabschnitt ist für das erfindungsgemäß angestrebte Ziel: Herabsetzung des Acrylnitril-Restmonomerengehalts weniger kritisch als die weiteren Abschnitte. Es können deshalb im ersten Abschnitt sogar überwiegend Comonomere eingesetzt werden, die eine Wasserlöslichkeit von > 1 und < $10^{-4}$ Mol/l besitzen. Als Monomere, deren Wasserlöslichkeit > 1 mol/l ist, seien beispielsweise die Acryl- und/oder Methacrylsäure und ihre Amide sowie die niedrigen Hydroxyalkyl-ester ($C_1$ - $C_3$) der genannten Säuren genannt. Eine Wasserlöslichkeit < $10^{-4}$ mol/l haben beispielsweise Ester der Acryl- oder der Methacrylsäure mit höheren Alkoholen, z.B. mit 2-Äthylhexylalkohol oder anderen aliphatischen oder cyclischen Resten gleicher oder höherer C-Zahl. Im zweiten Polymerisationsabschnitt sollen dagegen solche Comonomere vorzugsweise weniger als 50 Gew.-% des in diesem Abschnitt eingesetzten Monomerengemisches. ausmachen.

Der Einfluß der einzelnen Monomerengruppen auf die Produkteigenschaften ist dem Fachmann hinreichend bekannt, so daß durch die Auswahl eine Steuerung der Produkteigenschaften vorgenommen werden kann. (Vgl. H. Rauch-Puntigam und T. Völker "Acryl- und Methacrylverbindungen" Springer-Verlag 1967, S. 303, 305 ff).

Im allgemeinen wird der Anteil der ausgeprägt hydrophilen Monomeren an einem hydrophil eingestellten Polymerisat 50 Gew.-%, bezogen auf den Gesamtmonomerengehalt, nicht überschreiten. Der Gehalt an Comonomeren mit einer Wasserlöslichkeit > 1 mol/l wird im allgemeinen zwischen 0 und 50 Gew.-% liegen. Der Anteil an Monomeren mit einer Wasserlöslichkeit < $10^{-4}$ mol/l wird im allgemeinen 95 Gew.-%, bezogen auf den Gesamtmonomerengehalt, nicht überschreiten.

Weiter können bei dem Polymerisationsverfahren gemäß der vorliegenden Erfindung im ersten und im zweiten Polymerisationsabschnitt vernetzende Agentien, in der Regel in Anteilen unter 10 Gew.-%, bezogen auf den Gesamtgehalt an Monomeren, vorzugsweise bis 8 Gew.-%, zugesetzt werden.

Zu den Vernetzern können sowohl eigen- als fremdvernetzende Agentien gehören: Besonders erwähnt seien N-Methylolamide der Acryl- und/oder der Methacrylsäure. Bekanntlich kann bei deren Verwendung die Reaktion durch Säure katalysiert und durch Temperaturerhöhung beschleunigt werden. Weiter werden bei dem erfindungsgemäßen Verfahren neben dem Wasser und den Monomeren die für diesen (freiradikalischen) Polymerisationstyp bekannten Polymerisationshilfsmittel, wie Emulgatoren, Starter und ggf. Regler, mitverwendet. (Vgl. R. Gächter, H. Müller in "Taschenbuch der Kunststoff-Additive", Hanser-Verlag 1979).

Besonders genannt seien anionische Emulgatoren, wie die Salze langkettiger Alkylsulfate, z.B. Laurylsulfate, sodann Sulfobernsteinsäureesterderivate usw.. Der Emulgatorzusatz beträgt in der Regel 1 - 6 Gew.-%, bezogen auf die Monomermenge. Als Initiatoren kommen vorzugsweise wasserlösliche Initiatoren, etwa vom Typ des Wasserstoffperoxids, der Perborate, Persulfate und/oder der Azo-Verbindungen,infrage. Erwähnt seien auch Redoxsysteme, die neben den oben genannten Initiatoren als Redoxkomponente, z.B. $Na_2S_2O_5$, Formaldehydsulfoxylat, Ascorbinsäure u.a. enthalten. Weiter sind kationische Emulgatoren, wie z.B. Laurylammoniumsalze oder nichtionische Emulgatoren, wie

- 6 -

die Umsetzungsprodukte von subst. Phenolen oder von Fettalkoholen mit Äthylenoxid bzw. Propylenoxid anwendbar.

Die Menge an Initiator liegt in dem üblicherweise angewendeten Bereich, beispielsweise zwischen 0,01 und 0,3, vorzugsweise zwischen 0,1 und 0,2 Gew.-%, bezogen auf die Monomeren.

Wie bereits aufgeführt, beruht das erfindungsgemäße Verfahren auf der Zudosierung der Monomeren zum Polymerisationsansatz, die in mindestens zwei, lt. Kennzeichnung zu unterscheidenden, Polymerisationsabschnitten durchgeführt wird. Es ist aber möglich, innerhalb dieser zwei notwendig einzuhaltenden Polymerisationsabschnitte die Zugabe bzw. Zudosierungsmodalitäten so zu variieren, daß weitere Abschnitte unterschieden werden können.

Als Anhalt für den zeitlichen Verlauf des erfindungsgemäßen Verfahrens kann gelten, daß der zweite Polymerisationsabschnitt, bei dem kein Acrylnitril mehr zugesetzt wird, etwa ein Viertel der Gesamtpolymerisationsdauer ausmacht.

Bei dem erfindungsgemäß angewendeten Emulsionszulaufverfahren kann ein Teil des Wassers mit einem Teil des Initiators und einem Teil des Emulgators im Reaktionsgefäß vorgelegt werden. Die Mischung wird auf die Polymerisationstemperatur aufgeheizt und die Emulsion aus Monomer, Emulgator und Initiator über einen Zeitraum von im allgemeinen 2 - 8, vorzugsweise 3 - 5 Stunden, langsam zugegeben. Im Falle eines Monomerzulaufs enthält der Reaktor von Anfang an die gesamte Wasser-Emulgator- und Initiatormenge und es wird lediglich das Monomere innerhalb des o.g. Zeitraums zugegeben. Die nach und nach freiwerdende Polymerisationswärme kann durch Kühlung des Polymerisationskessels bequem abgeführt und dadurch die Temperatur, die ihrerseits den Reaktionsverlauf beeinflußt, gesteuert werden. Entscheidend für den Erfolg im Sinne der vorliegenden Erfindung ist, daß in dem vorstehend gekennzeichneten letzten Polymerisationsabschnitt kein Acrylnitril, sondern nur Vertreter der übrigen Comonomeren zugegeben werden.

Die resultierende erfindungsgemäße Dispersion besteht somit aus Latexteilchen mit einem acrylnitrilhaltigen Kern und einer davon verschiedenen, acrylnitrilhaltigen Schale, wobei die Schale lediglich das noch am Ende des ersten Zulaufabschnitts vorhandene Restacrylnitril eingebaut enthält. Dieses Restacrylnitril macht dann im allgemeinen weniger als 1 Gew.-% des Gesamtpolymerisats aus.

Die folgenden Beispiele dienen zur Erläuterung des erfindungsgemäßen Verfahrens. Aus den Vergleichsbeispielen wird deutlich, daß die Lösung der erfindungsgemäßen Aufgabe in ursächlichem Zusammenhang mit dem Polymerisationsverfahren lt. Kennzeichnung der Ansprüche steht.

Beispiel 1

Acrylnitrilfreie Polymerisation im zweiten
Polymerisationsabschnitt.

In einem 1 1-Rundkolben, mit Rührer und Kontaktthermometer ausgerüstet, wurden 144,4 Teile vollentsalztes Wasser und 2 Teile einer 10 gew.-%igen
Natriumlaurylsulfatlösung unter Rühren auf 80°C
erhitzt und mit 1 Teil einer 10 gew.-%igen Ammonium-
peroxodisulfatlösung versetzt. Danach wurden bei
dieser Temperatur eine erste Emulsion aus

| | |
|---|---|
| 165,0 Teile | vollentsalztes Wasser |
| 7,5 Teile | einer 10 gew.-%igen Natrium- |
| | laurylsulfatlösung |
| 7,5 Teile | einer 10 gew.-%igen Ammonium- |
| | peroxodisulfatlösung |
| 4,0 Teile | einer 60 gew.-%igen N-Methylol- |
| | methacrylamidlösung |
| 180,0 Teile | Äthylacrylat |
| 120,0 Teile | Acrylsäurenitril |
| 27,0 Teile | Methylmethacrylat |

im Anschluß daran eine zweite Emulsion aus

| | |
|---|---|
| 55,0 Teile | vollentsalztes Wasser |
| 2,5 Teile | einer 10 gew.-%igen Natriumlauryl- |
| | sulfatlösung |
| 2,5 Teile | einer 10 gew.-%igen Ammoniumper- |
| | oxodisulfatlösung |

|   |   |
|---|---|
| 2,6 Teile | einer 60 gew.-%igen N-Methylol-methacrylamidlösung |
| 60,0 Teile | Äthylacrylat |
| 9,0 Teile | Methylmethacrylat |

in insgesamt ca. 4 Stunden zugetropft.

Anschließend wird die Dispersion noch ca. 2,5 Stunden auf einer Temperatur von 80°C gehalten. Nach Abkühlen ergab sich ein Restgehalt von 8 ppm Acrylnitril.

Beispiel 2

= Vergleichsbeispiel, permanente Zugabe von Acrylnitril. Es wird wie unter Beispiel 1 verfahren, nur daß innerhalb 4 Stunden lediglich eine Emulsion aus

|   |   |
|---|---|
| 220,0 Teile | vollentsalztes Wasser |
| 10,0 Teile | einer 10 gew.-%igen Natriumlauryl-sulfatlösung |
| 10,0 Teile | einer 10 gew.-%igen Ammoniumper-oxodisulfatlösung |
| 6,6 Teile | einer 60 gew.-%igen N-Methylol-methacrylamidlösung |
| 240,0 Teile | Äthylacrylat |
| 120,0 Teile | Acrylsäurenitril |
| 36,0 Teile | Methylmethacrylat |

zugetropft wird.
Nach ca. 2,5 Stunden Nacherhitzen ergibt sich ein Restgehalt von ca. 1200 ppm Acrylnitril.

Beispiel 3

Nacherhitzen mit Äthylacrylat.

In einem 1 1-Rundkolben, mit Rührer und Kontaktthermometer ausgerüstet, wurden 105 Teile vollentsalztes Wasser und 0,2 Teile einer 10 gew-%igen
Natriumlaurylsulfatlösung unter Rühren auf 85°C erhitzt und mit 0,8 Teilen einer 10 gew.-%igen Ammoniumperoxodisulfatlösung versetzt. Sodann wurden in ca.
4 Stunden bei 85°C als Emulsion

|            |                                                    |
|------------|----------------------------------------------------|
| 239,0 Teile | vollentsalztes Wasser                              |
| 32,0 Teile  | einer 10 gew.-%igen Natrium-<br>laurylsulfatlösung |
| 12,0 Teile  | einer 10 gew.-%igen Ammonium-<br>peroxodisulfatlösung |
| 300,0 Teile | 2-Äthylhexylacrylat                                |
| 43,0 Teile  | Methylmethacrylat                                  |
| 32,0 Teile  | Acrylsäurenitril                                   |

zugetropft. Nach einer Pause von ca. 10 Minuten erfolgte die Zugabe von 25 Teilen Äthylacrylat in einer
Zeitspanne von ca. 1 Stunde. Anschließend wurde die
Dispersion noch für eine weitere Stunde auf 85°C gehalten, anschließend bei ca. 65°C 0,12 % Diisopropylbenzol-monohydroperoxid und 0,12 % Ascorbinsäure eingesetzt und innerhalb von 2 Stunden auf 25°C abgekühlt.
Es ergab sich ein Rest-Acrylnitril-Gehalt von ca.
10 ppm.

Beispiel 4
(Vergleichsbeispiel 2)

Nacherhitzen mit 2-Äthylhexylacrylat (Wasserlöslichkeit $< 10^{-4}$ mol/l).

In einem 1 l-Rundkolben, mit Rührer und Kontaktthermometer ausgerüstet, wurden 105 Teile vollentsalztes Wasser und 0,2 Teile einer 10 gew.-%igen
Natriumlaurylsulfatlösung unter Rühren auf 85°C
erhitzt und mit 0,8 Teilen einer 10 gew.-%igen
Ammoniumperoxodisulfatlösung versetzt. Anschließend
wurden innerhalb von 4 Stunden bei 85°C als Emulsion

| | |
|---|---|
| 255,0 Teile | vollentsalztes Wasser |
| 16,0 Teile | einer 10 gew.-%igen Natrium-laurylsulfatlösung |
| 12,0 Teile | einer 10 gew.-%igen Ammonium-peroxodisulfatlösung |
| 275,0 Teile | 2-Äthylhexylacrylat |
| 43,0 Teile | Methylmethacrylat |
| 32,0 Teile | Acrylsäurenitril |
| 25,0 Teile | Äthylacrylat |

zugetropft. Nach einer Pause von 10 Minuten wurden
25 Teile 2-Äthylhexylacrylat in einer Zeitspanne von
1 Stunde zugegeben. Anschließend wurde die Dispersion
bei 85°C noch 1 Stunde nacherhitzt, anschließend bei
ca. 65°C 0,12 % Diisopropylbenzolhydroperoxid und 0,12 %
Ascorbinsäure zugesetzt und innerhalb von 2 Stunden auf
25°C abgekühlt. Der Restgehalt an Acrylnitril betrug ca.
700 ppm.

Beispiel 5
(Vergleichsbeispiel 3)

Es wurde wie in Beispiel 4 verfahren, jedoch nur eine Emulsion aus

| 255,0 Teile | vollentsalztes Wasser |
| 16,0 Teile | einer 10 gew.-%igen Natrium-laurylsulfatlösung |
| 12,0 Teile | einer 10 gew.-%igen Ammonium-peroxodisulfatlösung |
| 300,0 Teile | 2-Äthylhexylacrylat |
| 43,0 Teile | Methylmethacrylat |
| 32,0 Teile | Acrylsäurenitril |
| 25,0 Teile | Äthylacrylat |

in ca. 4 Stunden zugegeben. Nach 1 Stunde Nacherhitzen bei 85°C werden bei ca. 65°C 0,12 % Diisopropylbenzol-monohydroperoxid und 0,12 % Ascorbinsäure zugesetzt und innerhalb von 2 Stunden auf 25°C abgekühlt. Es resultiert ein Rest-Acrylnitril-Gehalt von ca. 1000 ppm.

Beispiele 6 bis 9

Anstelle von Äthylacrylat im Beispiel 3 wurden
gleiche Teile anderer Monomerer nachpolymerisiert. Der jeweilige Rest-Acrylnitril-Gehalt ist
in nachstehender Tabelle zusammengefaßt:

| Monomer | Rest-AN-Gehalt |
|---|---|
| Methylmethacrylat | 5 ppm |
| Methylacrylat | 12 ppm |
| n-Butylacrylat | 20 ppm |
| n-Butylmethacrylat | 22 ppm |

Verfahren zur Herstellung rest-Acrylnitril-
armer Polymerisat-Dispersionen

Patentansprüche

1. Verfahren zur Herstellung von wäßrigen, aus Acrylnitril neben anderen Comonomeren aufgebauten, Polymerisatdispersionen im Emulsions- oder Monomer-Zulaufverfahren mit niedrigem Gehalt an Acrylnitril-Restmonomeren,

dadurch gekennzeichnet,

daß der Monomerenzusatz in zwei Abschnitten erfolgt, wobei im ersten Polymerisationsabschnitt das gesamte Acrylnitril zusammen mit wenigstens einem anderen Comonomeren zudosiert und im zweiten Polymerisationsabschnitt überwiegend solche Comonomeren zugesetzt werden, deren Wasserlöslichkeit bei Raumtemperatur zwischen 1 und $10^{-4}$ mol/1 beträgt.

2. Verfahren gemäß Patentanspruch 1, dadurch gekennzeichnet, daß in einem dritten Polymerisationsabschnitt unter Zusatz weiterer Initiatoren der Restacrylnitrilgehalt unter einen Wert von 50 ppm erniedrigt wird.

3. Verfahren gemäß Patentanspruch 2, dadurch gekennzeichnet, daß im dritten Polymerisationsabschnitt ein Redoxinitiatorensystem zur Anwendung kommt.

4. Verfahren gemäß Patentanspruch 1, dadurch gekennzeichnet, daß im zweiten Polymerisationsabschnitt Ester der Acryl- und/oder Methacrylsäure mit $C_1$- bis $C_4$-Alkoholen und/oder Styrol zugesetzt werden.

5. Verfahren gemäß den Patentansprüchen 1 und 4, dadurch gekennzeichnet, daß im ersten Polymerisationsabschnitt neben Acrylnitril Comonomere derselben Art zudosiert werden, wie sie im zweiten Polymerisationsabschnitt zugesetzt werden.

6. Verfahren gemäß den Patentansprüchen 1 bis 5, dadurch gekennzeichnet, daß der Anteil des Acrylnitrils an der Gesamtheit der eingesetzten Monomeren zwischen 0,5 und 50 Gew.-%, vorzugsweise zwischen 3 und 40 Gew.-%, ausmacht.

7. Verfahren gemäß den Patentansprüchen 1 bis 6, dadurch gekennzeichnet, daß der Anteil der im zweiten Polymerisationsabschnitt zudosierten Monomeren zwischen 2 und 50 Gew.-%, vorzugsweise zwischen 2 und 25 Gew.-%, bezogen auf die Gesamtheit der Monomeren, ausmacht.

8. Verfahren gemäß den Patentansprüchen 1 bis 7, dadurch gekennzeichnet, daß der zweite Polymerisationsabschnitt ca. ein Viertel der gesamten Polymerisationsdauer ausmacht.

9. Verfahren gemäß den Patentansprüchen 1 bis 3, dadurch gekennzeichnet, daß der Anteil der Comonomeren, deren Wasserlöslichkeit zwischen 1 und $10^{-4}$ mol/l liegt, zwischen 2 und 98 Gew.-%, vorzugsweise zwischen 2,5 und 75 Gew.-%, bezogen auf die Gesamtheit der eingesetzten Monomeren, ausmacht.

10. Verfahren gemäß dem Patentanspruch 1, dadurch gekennzeichnet, daß der Restmonomerengehalt an Acrylnitril am Ende des zweiten Polymerisationsabschnitts unter 1500 ppm liegt.

11. Acrylnitrilhaltige Polymerisatdispersion, deren Latexteilchen aus einem acrylnitrilhaltigen Polymerisatkern und einer vom Kern verschiedenen, acrylnitrilhaltigen Schale bestehen, dadurch gekennzeichnet, daß die Schale weniger als 50 Gew.-% des Gesamtpolymerisats ausmacht und weniger als 1 Gew.-% (bezogen auf das Gesamtpolymerisat) Acrylnitril eingebaut enthält.

**0034204**
Nummer der Anmeldung

**EP 80 10 6832**

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 317 369 (STANDARD OIL CO)<br><br>* Anspruch 1 * | 1-11 |
| | -- | |
| X | GB - A - 848 606 (STOCKHOLMS SUPERFOSFATFABRIKS)<br><br>* Anspruch 1 * | 1-10 |
| | ----- | |

### KLASSIFIKATION DER ANMELDUNG (Int Cl ³)

C 08 F  20/44
265/08

### RECHERCHIERTE SACHGEBIETE (Int. Cl.³)

C 08 F  20/42
20/44
120/42
120/44
220/42
220/44
265/08

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&. Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-02-1981 | CAUWENBERG |

EPA form 1503.1   06.78